# EUROPEAN PATENT APPLICATION

(11) **EP 1 270 197 A2**
(43) Date of publication of application: **02.01.2003**
(21) Application number: 02396094.1
(22) Date of filing: 17.06.2002
(51) Int. Cl.: B32B 1/08

(54) **Multilayer pipelike product and method for heating the same**

(30) Priority: 21.06.2001 FI 20011333
(71) Applicant: Uponor Innovation AB, 513 81 Fristad (SE)
(72) Inventor: Järvenkylä, Jyri, 15870 Hollola (FI)
(74) Representative: Huhtanen, Ossi

(57) **Abstract**

A multilayer pipelike product and a method for heating the same, the product comprising at least two layers (2, 3, 4). At least two layers (2, 3, 4) are provided with means for directing heating thereto. Different layers (2, 3, 4) can be heated separately such that when one layer (2, 3, 4) is heated, the rest of the product does not substantially warm up. A different heating arrangement is directed at each layer (2, 3, 4).

## Description

The invention relates to a multilayer pipelike product comprising at least two layers.

The invention further relates to a method for heating a pipelike product comprising at least two layers.

Various lining methods are employed for restoring pipelines, such as underground sewer pipes. Typically, a pipe liner is bent into a smaller size. When the pipe liner is bent, the outer and inner diameters of the pipe liner are substantially equally reduced. The folded pipe is inserted into a pipe to be lined, after which the pipe liner is expanded and pressed against the pipe to be lined by means of overpressure. An example of such a solution is disclosed in US 5 091 137. The bending radius of such a folded pipe liner is quite large; therefore, it is often impossible to insert the pipe liner inside the pipe to be lined through an inspection well but some digging has to be carried out in connection with inspection wells although the pipe liner were heated during installation. The large bending radius is thus caused by the great axial stiffness of such a pipe liner.

EP 0 302 061 and GB 9 609 289 disclose pipe liners comprising an inner layer and a corrugated outer layer outside the inner layer. In EP 0 302 061, the inner layer is made of a flexible material; therefore, the axial stiffness of a pipe is quite low. In GB 9 609 289, in turn, an advantageous structure of a pipe enables the axial stiffness to be reduced. The low axial stiffness of such pipes enables the pipes to be installed through quite small inspection wells. The outer diameter of the pipes is smaller than the inner diameter of the pipe to be lined, and some fixing and sealing material is injected between the outer surface of the pipe liner and the inner surface of the pipe to be lined. However, such a lining considerably reduces the inner diameter of a pipeline. In addition, it is quite laborious and difficult to inject the fixing and sealing material between the pipe liner and the pipe to be lined. EP 0 302 061 further discloses a solution wherein the outer diameter of the pipe liner and the inner diameter of the pipe to be lined are equal in size. When the pipe liner is then pulled into the pipe to be lined, the outer surface of the pipe liner bends and sets against the inner surface of the pipe to be lined. In such a case, however, the friction between the pipes becomes quite high, which means that the lining procedure requires the pipe liner to be pulled extremely forcefully. This makes installation very difficult, i.e. lining is extremely difficult to implement in practice.

EP 0 419 470 discloses a pipe liner comprising a wall provided with ribs arranged outside the wall. The ribs enable the wall to be quite thin, the ring stiffness of the pipe still being quite high. However, the axial stiffness of the pipe is quite low, so the bending radius of such a pipe is fairly small. The tensile strength of the wall is greater than the shear strength of the ribs. Consequently, when the pipe liner is inserted into the pipe to be lined, the ribs bend and lock the pipe liner against the inner surface of the pipe to be lined. Also in this case, when the pipe liner is being inserted into the pipe to be lined, friction becomes extremely high, so the force necessary for installing the pipe liner in the pipe to be lined has to be extremely great.

An object of the present invention is to provide a novel multilayer pipelike product and a method for heating the same.

The product of the invention is characterized in that at least two layers are provided with means for directing heating thereto such that the layers can be heated separately such that when one layer is heated, the rest of the product does not substantially warm up.

Furthermore, the method of the invention is characterized in that at least two layers are provided with different means for directing heating thereto, whereby different heating arrangements are directed at the product such that a heating arrangement is used for heating a particular layer of the product while the rest of the product does not substantially warm up.

The basic idea of the invention is that the multilayer pipelike product comprises at least two layers and at least two layers are provided with means for directing heating thereto such that the layers can be heated separately such that when one layer is heated, the rest of the pipe does not substantially warm up. The idea of a preferred embodiment is that different layers comprise different filling materials for directing heating at different layers. Particularly preferably, the product is a pipe liner comprising at least an inner layer and an outer layer, the outer layer having a memory of a shape wherein the outer diameter is at its largest and the outer diameter of the pipe liner being proportionately more reducible than the inner diameter of the pipe liner. Then, when the pipe liner is being installed in a pipe to be lined, the inner layer is heated such that the outer layer does not warm up, which makes the pipe liner easy to bend and install. The outer layer, however, remains in its diminished size during the installation, and after the pipe liner has been installed in the pipe to be lined, the outer layer is heated such that it is made to assume the shape wherein the outer diameter is at its largest. The idea of yet another preferred embodiment is that the product comprises an intermediate layer, which can also be heated separately.

An advantage of the invention is that the product is extremely versatile and easy to use, having e.g. extremely good installation properties. When the solution is applied in connection with a pipe liner, a solution is achieved which enables the pipe liner to be installed quickly and easily and which enables the pipe liner to be tightened extremely well in its place inside the pipe to be lined. If the product, such as a pipe liner, comprises an intermediate layer to be heated separately, a foaming agent that has not reacted yet can be arranged therein and, after the pipe has been installed in place, the intermediate layer can be foamed up by heating substantially the intermediate layer only.

The invention will be described in closer detail in the accompanying drawings, in which

Figure 1a is a cross-sectional side view of a pipe liner,

Figure 1b is a cross-sectional side view of the pipe liner according to Figure 1a when being installed in a pipe to be lined,

Figure 1c is a cross-sectional side view of the pipe liner according to Figure 1a after being installed in the pipe to be lined,

Figure 2a is a cross-sectional side view of a second pipe liner,

Figure 2b is a cross-sectional side view of the pipe liner according to Figure 2a when being installed in a pipe to be lined, and

Figure 2c is a cross-sectional side view of the pipe liner according to Figure 2a after being installed in the pipe to be lined.

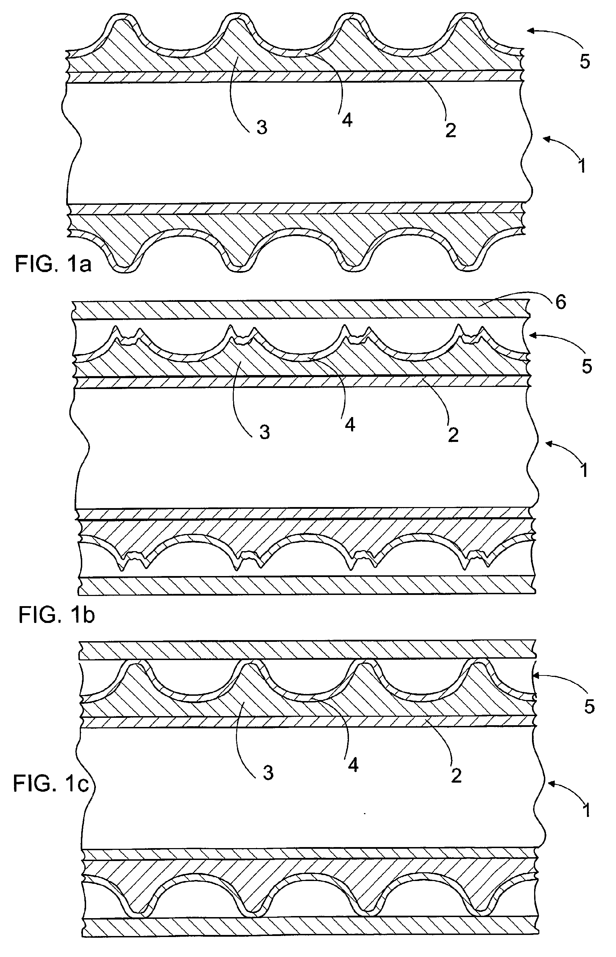

Figure 1a shows a multilayer pipe, which is a pipe liner 1. The pipe liner 1 comprises an inner layer 2, a possible intermediate layer 3 and an outer layer 4. The outer layer 4 is shaped to form a corrugation 5. Preferably, at least the outer layer 4 is made of an extrudable cross-linked polyolefin, such as cross-linked polyethene PEX. Most preferably, the inner layer 2 is also made of an extrudable cross-linked polyolefin, most preferably of cross-linked polyethene PEX. The intermediate layer may be made of any extrudable thermoplast. Most preferably, the intermediate layer is made of polyolefin, such as polyethene PE or polypropylene PP or copolymers based thereon. The intermediate layer 3 may also be made of at least partly cross-linked polyolefin. Most preferably, the intermediate layer 3 is a layer made of foam. The density of the intermediate layer 3 is preferably less than 500 kg/m³. The intermediate layer 3 makes the pipe liner more rigid and more resistant to inner pressure. Figure 1 shows a corrugated pipe wherein the outer layer 4 and the inner layer 2 are not welded together. In an alternative embodiment, they can be welded together in a conventional manner.

The material of all layers, also the foam material of the intermediate layer, may comprise filling materials. Suitable filling materials for increasing rigidity include calcium carbonate, talc and wollastonite. Filling materials that are particularly usable include materials that react to high frequencies, such as magnetite, silicates, ammonia salts, phosphates, carbon black, aluminium trihydrate ATH, metallic fibres or the like. The filling material is selected for each layer on the basis of which layer is to react to heating most aggressively. For instance, the outer layer constituting the corrugation 5 may comprise filling materials reacting to radiation energy, infrared energy, radio frequency energy or microwave energy. When the most effective filling materials are arranged in the outer layer, the outer layer 4 becomes the quickest layer to warm up, thus being the first layer to reach the crystallization point. The filling materials may also increase thermal conductivity in the foam layer in particular. Naturally, also the inner layer can be the only one to react to a particular method of heating. The way in which the layer-specific heating, i.e. heating a particular layer separately without heating the rest of the layers, is implemented may vary in many ways. The basic plastic material of the pipe may react to the heating method or the basic plastic material may be non-polar, such as polyethene. Suitable filling materials are thus added to the non-polar basic plastic material. For example, a filling material reacting e.g. to radio frequency energy can be added to the outer layer. Such filling materials include e.g. some ammonia salts. A frequency range that does not produce an absorption peak at the particular radio frequency but at another frequency range is then selected as the heating method of the inner layer. For instance infrared heating or microwave radiation is then used.

Furthermore, the means for directing heating at different layers can be constructed such that one layer of the product is made of a non-polar plastic and another layer is made of a polar plastic. In such a case, the layer made of a non-polar plastic is heated using a conventional heat source and the layer made of a polar plastic is heated using a radio frequency.

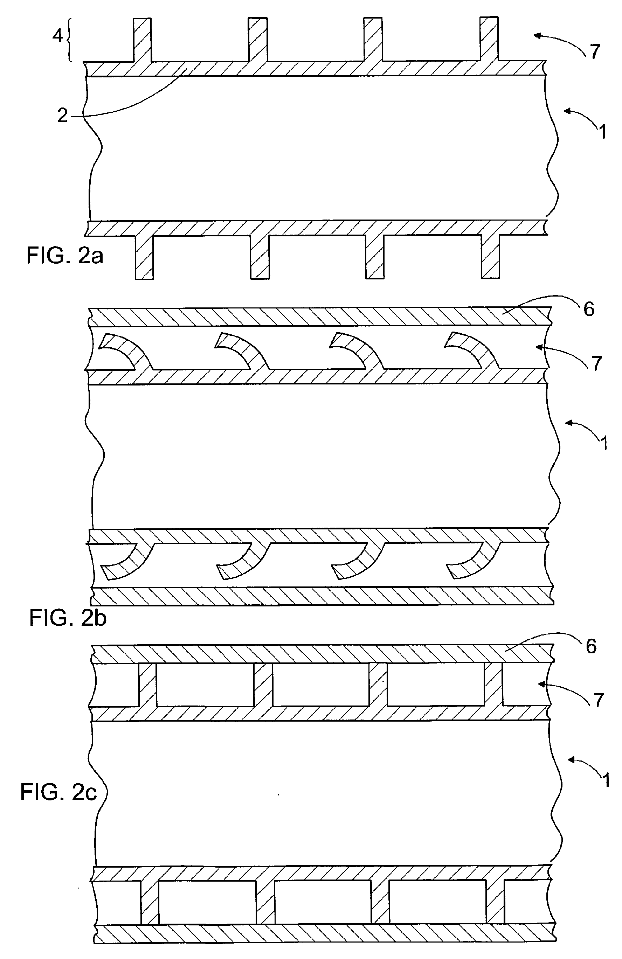

Figure 2a shows another pipe liner 1. In this embodiment, a set of ribs 7 is provided on the outer surface of the pipe liner 1. A wall of the pipe liner 1 can be made of the same material as the set of ribs 7, or it can be made of a different material. The set of ribs can be radial or helical. The set of ribs does not have to be uniform but it may consist of parts having certain lengths. The pipe shown in Figure 2a is also a multilayer pipe wherein the uniform wall constitutes the inner layer 2 and the set of ribs 7 constitute the outer layer 4.

The pipe liner 1 is made of a PEX-a material e.g. by feeding a cross-linking material into an extruder before a mixing zone wherein the cross-linking material is mixed with a high-density or medium-density polyethene. The material with which the cross-linking material, such as peroxide, is mixed may be a mixture having some filling materials already mixed therein, or the peroxide and the filling materials can be mixed in the mixing zone of the extruder at the same time. Next, the material is fed into a multilayer nozzle wherein a tube-like preform is formed for the outer layer. In the extruder and at the nozzle end, the temperature of the material is kept below the breakdown temperature of peroxide, which means that the material will not yet be cross-linked. The tube-like preform is blown or sucked against heated chill moulds of a corrugator. The temperature of the chill moulds is sufficiently high in order for the cross-linking reaction of the material to start. The solution disclosed in DE 19961455 is thus applied herein. At the same time, the outer layer meets the preform constituting the inner layer and the foam of the potential intermediate layer. Since the layers are not completely cross-linked, they weld together extremely well.

The pipe liner can also be manufactured in a conventional manner but using a PEX-b material cross-linking by the effect of moisture. Cross-linking then takes place in a cooling basin, after the pipe has been formed. It is also possible to construct a thin outer layer of a PEX-c material cross-linking by the effect of radiation, in which case the pipe liner 1, once formed, is thus cross-linked by exposure to radiation.

After at least the outer layer 4 constituting the corrugation 5 or the set of ribs 7 of the pipe liner 1 has been cross-linked, a part defining the outer diameter of the pipe liner 1, i.e. the outer layer 4 or the set of ribs 7, has a memory of the shape shown in Figures 1a and 2a. The pipe liner 1 is installed in a pipe 6 to be lined such that the outer diameter of the pipe liner is reduced such that the outer diameter of the pipe liner diminishes proportionately more than the inner diameter thereof. The outer diameter can be reduced e.g. by buckling the outer parts of the corrugation 5 into the shape shown in Figure 1b. The wall of the pipe liner 1 is then compressed. On the other hand, the set of ribs 7 can be bent into the shape shown in Figure 2b. If the corrugation 5 is high, it can also be bent instead of buckling. Buckling or bending can be implemented e.g. immediately after the pipe has been constructed when the part defining the outer diameter of the pipe has a permanent memory of the shape wherein the outer diameter is at its largest. Cross-linked materials, for instance, have such a memory. A memory thus means that a material aims to resume the shape it used to have before being changed, typically when being cross-linked. The outer diameter can also be reduced only just before the pipe liner 1 is installed in the pipe 6 to be lined. Although the outer layers were not made of a cross-linked material, they can be manufactured in many different ways, using a material that will stay e.g. bent long enough before it starts resuming its larger shape. When the outer diameter diminishes, the inner diameter of the pipe liner 1 may also diminish, but the point is that the outer diameter of the pipe liner diminishes proportionately more than the inner diameter thereof.

The outer diameter can be reduced either after cross-linking while the pipe liner is being manufactured or just before insertion, using a simple reduction nozzle for pipe diameters. A mandrel can be arranged inside the pipe to ensure that the inner diameter of the pipe liner 1 is not diminished too much. The inner layer of the pipe liner can also be prevented from becoming too small by constructing the inner layer 2 of the pipe liner such that its ring stiffness is greater than the ring stiffness of the outer layer 4. The ring stiffness of the outer layer 4 can be made smaller than the ring stiffness of the inner layer 2 e.g. by providing the outer layer 4 with sufficiently thin walls. When a mechanical force is then directed at the pipe liner 1 from outside, the outer diameter of the pipe liner 1 diminishes more than the inner diameter thereof.

An alternative for reducing the outer diameter is to use rolls arranged in an inclined position and at an oblique angle with respect to the middle axis of the pipe. The solution disclosed in US 5 589 127 is thus applied.

The pipe with the reduced outer diameter is pulled or pushed into the pipe 6 to be lined, such as a sewer pipe, by bending and forcing it from one inspection well to another. Since the outer diameter of the pipe liner 1 is smaller, it does not, at least throughout, come into contact with the inner surface of the pipe 6 to be lined; this is illustrated in Figures 1b and 2b. Consequently, it only takes little strength to install the pipe liner 1.

After the pipe liner 1 has been installed in place, its outer diameter is extended utilizing the memory of the material and/or the inner pressure of the pipe liner 1 such that the result is the situation shown in Figures 1c and 2c. The outer diameter can be increased e.g. by heating the outer layer from inside the pipe liner 1. The outer layer can be heated using e.g. radiation absorbed by the outer layer. The absorbency of radiation can be ensured by means of suitable filling materials. If the set of ribs 7 or the corrugation 5 is helical, a resistor can be provided to heat the same. If the inside of the corrugation 5 has been left open and the corrugation is shaped like a screw line, warm air or another suitable warm medium, such as steam, can be fed into the corrugation. When a helical corrugation or a helical set of ribs is used, the warm medium can also be fed between the pipe liner 1 and the pipe 6 to be lined. The part to be warmed can also be made of an electrically conductive material, which means that it can be heated directly, using electric couplings.

If the inner diameter of the pipe liner 1 is also reduced, the inner diameter can first be expanded by heat. In any case, it is advisable to arrange at least a small overpressure in the pipe liner 1 to support the pipe liner in order for the pipe liner not to collapse inwards while the outer diameter of the pipe liner 1 is expanded. If the pipe liner is provided with a corrugation 5, overpressure can also be arranged inside the corrugation while increasing the outer diameter of the pipe liner 1 to support the pipe liner when its outer diameter is increased.

Depending on the structure of the pipe, the entire pipe can be heated using a single heat source, or only e.g. the outer layer of the pipe is heated if e.g. only the outer layer comprises additional substances that react to the selected source of radiation, such as a microwave heater or a radio frequency oscillator. The pipe liner 1 can be heated in its entirety or it can be heated stepwise by pulling a heating device through the pipe liner 1. The potential foamed intermediate layer 3 can be formed such that it is not foamed before the pipe liner has been installed in place, i.e. the intermediate layer comprises a foaming agent that has not reacted yet. Then, by foaming up the intermediate layer 3 by heating this layer only, the outer surface of the pipe liner 1 can be tightly pressed against the inner surface of the pipe 6 to be lined. On the other hand, the intermediate layer 3 can be foamed already while manufacturing the pipe liner 1 and it can e.g. be compressed before the pipe liner 1 is installed in the pipe 6 to be lined, after which the foam layer can be expanded to its original thickness by heating.

The system may comprise sensors to indicate to a user when the pipe has expanded sufficiently. Warm air, for example, can be blown from an inspection well between the pipe liner 1 and the pipe 6 to be lined. When the air stops flowing, it can be concluded that the pipe liner has expanded sufficiently. Thermometers may also be used for monitoring the process, measuring the temperature of the outer layer through the inner layer or the temperature of the air flowing from corrugation grooves.

If the pipe liner only comprises an inner layer 2 and a corrugated outer layer 4, air gaps are provided between the outer layer 4 and the inner layer 2 at the corrugations. The holes in the outer layer 4 ensure that air is allowed to flow through these holes when the corrugation 5 is buckled and that the joint between the outer layer 4 and the inner layer 2 is not weakened.

If the pipe is made of natural-coloured cross-linked polyethene PEX, a transparency detector can be used for detecting whether e.g. the outer layer has reached a sufficient expansion temperature. The operation of the transparency detector is based on the fact that cross-linked polyethene becomes transparent when heated above the crystallization point.

Different layers may comprise different filling materials. The outer layer, for instance, may comprise a filling material reacting to radio frequency waves and the intermediate layer may comprise a foam layer caused to expand by microwaves. The inner layer may also be arranged to be heated separately and quickly during installation, when the pipe liner 1 has to be bent in its axial direction. When it is possible to only heat the inner layer, the outer layer will not try to resume its larger shape but only the inner layer becomes softer, enabling the pipe to be bent even at abrupt angles with no need to worry that the pipe might buckle. The inner layer can also be made of a flexible material. The inner layer is then made of a polyolefin having an elasticity modulus smaller than that of the medium-density polyetnene. A suitable material is e.g. an ethene acryl polymer.

Preferably, the thickness of the walls of the inner layer 2 is about 0.005 * DI ± 0.5 mm, wherein DI is the total diameter of the pipe. Such a thickness yields good balance as regards the axial stiffness and the durability of the inner surface against substances passing in a sewer. The minimum thickness of a wall of the outer layer ranges between 0.0018 * Dl ± 1 mm. The diameter Dl of the pipe liner may vary e.g. between 6 to 1600 mm.

The drawings and the related description are only intended to illustrate the idea of the invention. In its details, the invention may vary within the scope of the claims. The pipe liner of the invention can be used for lining several different objects. The solution of the invention enables e.g. sewer pipes, pressure pipes inside buildings and water and gas pipes outside buildings and other such structures to be lined. The pipe liner may also comprise an inner layer coated with compressible foam. The outer diameter is then reduced by pressing the outer foam layer while the expansion takes place by thermal energy and possibly by inner overpressure. The pipe liners according to Figures 1a and 2a may comprise areas with neither a corrugation nor a set of ribs but with a smooth outer layer only. This smooth part can be used e.g. for installing branch pipes. The pipe liner 1 can be tightened against the inner surface of the pipe to be lined e.g. against the inner surface of a joint sleeve located in the vicinity of or inside an inspection well in a manner to be shown in the following. When the outer diameter of the pipe liner has not yet assumed the shape wherein the outer diameter is at its largest, a rubber or elastomer seal is arranged outside the pipe liner. Next, when the outer diameter of the pipe liner is made to resume the shape wherein the outer diameter is at its largest, the pipe liner presses the seal against the surface of the pipe to be lined, thus pressing the seal in between the outer surface of the pipe liner 1 and the inner surface of the pipe 6 to be lined and constituting an extremely tight joint. This characteristic can be utilized also when a lateral joint is to be insulated. Rubber rings are then used for sealing the sewer, and a branch pipe can be formed by simply cutting a hole in the pipe liner. A side branch may also be constructed in a normal manner and tightened by welding a flange preferably in an un-crosslinked inner layer. The multilayer pipelike product of the invention can be e.g. a pipe, pipe fitting or a well. In principle, the multilayer pipe may be a pipe suitable for various purposes, e.g. an air-conditioning pipe. The layer-specific heating process can be utilized at several different points during the lifetime of the pipe, e.g. in connection with maintenance and repair procedures. If a layer of the product contracts by heat, the product can be made e.g. to detach itself by heating. In addition to or instead of changing the size of a layer of the product, the layer-specific heating can also be used for starting a cross-linking reaction in a particular layer.

## Claims

1. A multilayer pipelike product comprising at least two layers (2, 3, 4), **characterized in that** at least two layers (2, 3, 4) are provided with means for directing heating thereto such that the layers (2, 3, 4) can be heated separately such that when one layer (2, 3, 4) is heated, the rest of the product does not substantially warm up.

2. A product as claimed in claim 1, **characterized in that** different layers (2, 3, 4) comprise different filling materials for directing heating separately at different layers (2, 3, 4).

3. A product as claimed in claim 1 or 2, **characterized in that** the product comprises an inner layer (2), an intermediate layer (3) and an outer layer (4), the intermediate layer (3) also being provided with means for directing heating at the intermediate layer (3) only.

4. A product as claimed in claim 3, **characterized in that** the intermediate layer (3) comprises a foaming agent that has not reacted yet and the intermediate layer (3) can be foamed up by heating the intermediate layer (3).

5. A product as claimed in any one of the preceding claims, **characterized in that** the product is a pipe liner (1) comprising at least an inner layer (2) and an outer layer (4), which has a memory of a shape wherein the outer diameter is at its largest, the outer diameter of the pipe liner (1) being proportionately more reducible than the inner diameter of the pipe liner (1).

6. A method for heating a pipelike product comprising at least two layers (2, 3, 4), **characterized in that** at least two layers (2, 3, 4) are provided with means for directing heating thereto, whereby different heating arrangements are directed at the product such that a heating arrangement is used for heating a particular layer (2, 3, 4) of the product while the rest of the product does not substantially warm up.

7. A method as claimed in claim 6, **characterized in that** the product comprises an inner layer (2), an intermediate layer (3) and an outer layer (4), the intermediate layer (3) comprising a foaming agent that has not reacted yet and also means for directing heating thereto without substantially heating the rest of the product, whereby the intermediate layer is heated in order to foam up the intermediate layer (3).

8. A method as claimed in claim 6 or 7, **characterized in that** the product is a pipe liner comprising at least an inner layer (2) and an outer layer (4), which has a memory of a shape wherein the outer diameter is at its largest, the outer diameter of the pipe liner (1) being proportionately more reducible that the inner diameter of the pipe liner (1), whereby when the pipe liner is being installed, substantially only the inner layer is heated, and when the pipe liner has been installed in a pipe (6) to be lined, substantially only the outer layer (4) is heated.
